(19) Europäisches Patentamt
European Patent Office
Office européen des brevets

(11) EP 1 004 619 B1

(12) **EUROPÄISCHE PATENTSCHRIFT**

(45) Veröffentlichungstag und Bekanntmachung des Hinweises auf die Patenterteilung:
**27.10.2004 Patentblatt 2004/44**

(51) Int Cl.$^7$: **C08K 3/34**

(21) Anmeldenummer: **00103337.2**

(22) Anmeldetag: **01.03.1993**

# (54) Thermoplastische Formmassen enthaltend Magnesium-Aluminium-Silikat

Thermoplastic moulding compositions containing magnesium-aluminum silicates

Masses à mouler thermoplastiques contenant de silicates magnésium-aluminium

(84) Benannte Vertragsstaaten:
**DE FR GB IT**

(30) Priorität: **13.03.1992 DE 4208108**

(43) Veröffentlichungstag der Anmeldung:
**31.05.2000 Patentblatt 2000/22**

(62) Dokumentnummer(n) der früheren Anmeldung(en) nach Art. 76 EPÜ:
**93103215.5 / 0 560 160**

(73) Patentinhaber: **Bayer MaterialScience AG**
**51368 Leverkusen (DE)**

(72) Erfinder:
- **Eckel, Thomas, Dr.**
  **41540 Dormagen (DE)**
- **Wittmann, Dieter, Dr.**
  **51375 Leverkusen (DE)**
- **Ott, Karl-Heinz, Dr.**
  **51375 Leverkusen (DE)**
- **Wulff, Claus, Dr.**
  **47800 Krefeld (DE)**
- **Freitag, Dieter, Dr.**
  **47802 Krefeld (DE)**

(56) Entgegenhaltungen:
**EP-A- 0 358 415**
**WO-A-91/11498**
**DE-A- 2 428 307**
**DE-A- 3 810 006**
**US-A- 4 440 889**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 004 619 B1

Printed by Jouve, 75001 PARIS (FR)

## Beschreibung

Die Erfindung betrifft thermoplastische Formmassen enthaltend thermoplastische Polymere aus bifunktionellen reaktiven Polymeren, niedermolekulare Additive und spezielle Magnesium-Aluminium-Silikate.

Thermoplastische Polymere und Mischungen verschiedener thermoplastischer Polymerer spielen als Konstruktionswerkstoffe in der Technik eine bedeutende Rolle. Die meisten dieser Polymerzusammensetzungen enthalten neben Restmonomeren, Restlösungsmitteln und Oligomeren niedermolekulare Additive, die ihnen bestimmte Eigenschaften verleihen, z.B. Stabilisatoren, Farbstoffe, Entformungsmittel, Flammschutzmittel, Antistatika.

Solche niedermolekularen Additive treten wegen ihrer Flüchtigkeit bei den üblichen Verarbeitungstemperaturen (meist 200 bis 350°C), teilweise aus den thermoplastischen Zusammensetzungen aus, verlieren ihre Wirkung und verursachen Qualitätseinbußen wie Oberflächenstörungen an den Formteilen, Belagbildung an den Spritzgußwerkzeugen, Geruchsbelästigungen.

Es wurde gefunden, dass speziell vorbereitete Magnesium-Aluminium-Silikate niedermolekulare Additive in Polymeren soweit binden können, dass diese bei der Verarbeitung nicht ausdampfen. Diese Trägermaterialien beeinflussen die Eigenschaften thermoplastischer Polymerer nicht negativ, so dass z.B. die Zähigkeit nur geringfügig zurückgeht, die Oberflächenqualität erhalten bleibt und die Wärmeformbeständigkeit sowie die Beständigkeit gegenüber Chemikalien verbessert wird. Auch Flammschutzmittel, die im allgemeinen in größerer Menge eingesetzt werden müssen, verbleiben bei Verarbeitungstemperaturen im Polymeren und können im Brandfalle ihre Wirksamkeit voll entfalten.

Gegenstand der Erfindung sind thermoplastische Formmassen enthaltend:

A. 100 Gew.-Teile eines Polymeren von bifunktionellen reaktiven Verbindungen,

B. 0,1 bis 40, vorzugsweise 0,5 bis 20 Gew.-Teile eines Additives mit einem Molekulargewicht kleiner 2000 g/Mol, vorzugsweise kleiner 1000 g/Mol,

und

C. 0,1 bis 50, vorzugsweise 0,5 bis 15 Gew.-Teile eines Magnesium-Aluminium-Silikates mit einem Schüttgewicht <1 $g/cm^3$, vorzugsweise <0,5 $g/cm^3$, besonders bevorzugt <0,2 $g/cm^3$ und einem Teilchendurchmesser von 1 bis 5000 μm, vorzugsweise von 3 bis 500 μm, besonders bevorzugt von 5 bis 100 μm und einem Gehalt an Übergangsmetallverbindungen von 0 bis 5 Gew.-%, vorzugsweise 0 bis 1 Gew.-%, besonders bevorzugt 0 bis 0,5 Gew.-%, welches bei 700 bis 1100 °C durch das verdampfende Kristallwasser expandiert und danach durch Behandlung mit Säuren erhältlich ist.

<u>Thermoplastische Polymere A</u>

Thermoplastische Polymere A sind Polymere aus bifunktionellen reaktiven Verbindungen. Erfindungsgemäße thermoplastische Polymere A können auch Mischungen verschiedener Polymerer sein.

Die thermoplastischen Polymere A sind Polymere, die durch Polykondensation aus mindestens einer reaktiven Verbindung hergestellt worden sind, wie beispielsweise Polycarbonate, Polyester, Polysulfone, Polyethersulfone, Polyimide, Polyetherimide, Polyetherketone, Polyarylensulfide, Polyamide und Polyurethane.

Bevorzugte Polycarbonate sind solche auf Basis der Diphenole der Formel (I)

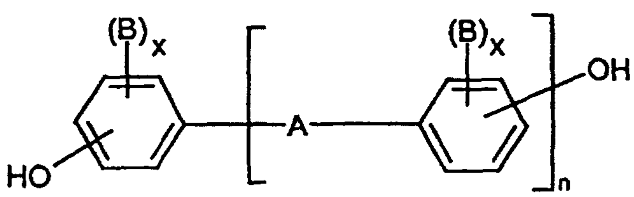

(I),

worin

A eine Einfachbindung, ein $C_1$-$C_5$-Alkylen, ein $C_2$-$C_5$-Alkyliden, ein $C_5$-$C_6$-Cycloalkyliden, -S- oder -$SO_2$-,

B Chlor, Brom

X 0, 1 oder 2 und

n 1 oder 0 sind.

Erfindungsgemäß geeignete Polycarbonate sind sowohl Homopolycarbonate als auch Copolycarbonate.
A kann auch eine Mischung der vorstehend definierten thermoplastischen Polycarbonate sein.
Polycarbonate können in bekannter Weise aus Diphenolen mit Phosgen nach dem Phasengrenzflächenverfahren oder mit Phosgen nach dem Verfahren in homogener Phase, dem sogenannten Pyridinverfahren, hergestellt werden, wobei das Molekulargewicht in bekannter Weise durch eine entsprechende Menge an bekannten Kettenabbrechern eingestellt werden kann.
Geeignete Kettenabbrecher sind z.B. Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 (Le A 19 006) oder Monoalkylphenol bzw. Dialkylphenol mit insgesamt 8-20 C-Atomen in den Alkylsubstituenten gemäß deutscher Patentanmeldung P 3 506 472,2 (Le A 23 654), wie 3,5-ditert.-Butylphenol, p-iso-Octylphenol, p-tert.-Octylphenol, p-Dodecylphenol und 2-(3,5-Dimethyl-heptyl)-phenol und 4-(3,5-Dimethyl-heptyl)-phenol.
Die Menge an Kettenabbrechern beträgt im allgemeinen zwischen 0,5 und 10 Mol-%, bezogen auf die Summe der jeweils eingesetzten Diphenole (I).
Die erfindungsgemäß geeigneten Polycarbonate A haben mittlere Molekulargewichte ($\overline{M}$w, Gewichtsmittel, gemessen z.B. durch Ultrazentrifugation oder Streulichtmessung) von 10 000 bis 200 000, vorzugsweise von 20 000 bis 80 000.
Geeignete Diphenole der Formel (I) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-propan, 2,2-Bis-(3,5-dibrom-4-hydroxyphenyl)-propan.
Bevorzugte Diphenole der Formel (I) sind 2,2-Bis-(4-hydroxyphenyl)-propan, 2,2-Bis-(3,5-dichlor-4-hydroxyphenyl)-propan und 1,1-Bis-(4-hydroxyphenyl)-cyclohexan.
Bevorzugte Diphenole sind auch alkylsubstituierte Dihydroxydiphenylcycloalkane der Formel (II),

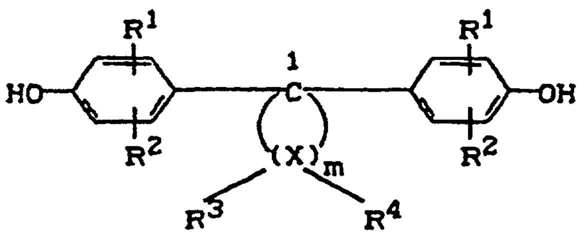 (II)

worin

$R^1$ und $R^2$ unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl,

m eine ganze Zahl von 4 bis 7, bevorzugt 4 oder 5,

$R^3$ und $R^4$ für jedes X individuell wählbar, unabhängig voneinander Wasserstoff oder $C_1$-$C_6$-Alkyl

und

X Kohlenstoff bedeuten, mit der Maßgabe, daß an mindestens einem Atom X $R^3$ und $R^4$ gleichzeitig Alkyl bedeuten.

Die erfindungsgemäß geeigneten Polycarbonate A können in bekannter Weise verzweigt sein, und zwar vorzugsweise durch den Einbau von 0,05 bis 2,0 Mol-%, bezogen auf die Summe der eingesetzten Diphenole, an drei- oder mehr als dreifunktionellen Verbindungen, z.B. solchen mit drei oder mehr als drei phenolischen Gruppen.
Bevorzugte Polycarbonate sind neben dem Bisphenol-A-Homopolycarbonat die Copolycarbonate von Bisphenol A mit bis zu 15 Mol-%, bezogen auf die Mol-Summen an Diphenolen, an 2,2-Bis-(3,5-dibrom-4-hydroxyphenyl)-propan.

Die Polycarbonate A können teilweise oder vollständig durch aromatische Polyestercarbonate ersetzt werden.

Bevorzugte Polyester A sind Polyalkylenterephthalate. Diese sind Reaktionsprodukte von aromatischen Dicarbonsäuren (oder ihren reaktionsfähigen Derivaten, z.B. Dimethylestern oder Anhydriden) und aliphatischen, cycloaliphatischen oder arylaliphatischen Diolen und Mischungen solcher Reaktionsprodukte.

Bevorzugte Polyalkylenterephthalate lassen sich aus Terephthalsäuren (oder ihren reaktionsfähigen Derivaten) und aliphatischen und cycloaliphatischen Diolen mit 2 bis 10 C-Atomen nach bekannten Methoden herstellen (Kunststoff-Handbuch), Band VIII, S. 695 ff, Carl Hanser Verlag, München 1973).

Bevorzugte Polyalkylenterephthalate enthalten 80 bis 100, vorzugsweise 90 bis 100 Mol-%, bezogen auf die Dicarbonsäurekomponente, Terephthalsäurereste und 80 bis 100, vorzugsweise 90 bis 100 Mol-%, bezogen auf die Diolkomponente, Ethylenglykol und/oder Butandiol-1,4-Reste. Neben Terephthalsäureresten sind 0 bis 20 Mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacin-, Azelain- oder Cyclohexandiessigsäure. Neben Ethylenglykol- und/oder Butandiol-1,4-Resten sind 0 bis 20 Mol-% anderer aliphatischer Diole mit 3 bis 12 C-Atomen oder cycloaliphatischer Diole mit 6 bis 12 C-Atomen enthalten, z.B. Reste von Pentandiol-1,5, Hexandiol-1,6, Cyclohexandimethanol-1,4, 3-Methylpentandiol-1,3 und - 1,6, 2-Ethylhexandiol-1,3, 2,2-Diethylpropandiol-1,3, Hexandiol-2,5, 1-4-Di(β-hydroxyethoxyphenyl)-propan, 2,4-Dihydroxy-1,1,3,3-tetramethylcyclobutan, 2,2-Bis-(3-β-hydroxyethoxyphenyl)-propan und 2,2-Bis-(4-hydroxypropoxyphenyl)-propan (DE-OS 2 407 647, 2 407 776, 2 715 932).

Die Polyalkylenterephthalate können durch Einbau relativ kleiner Mengen 3- oder 4-wertiger Alkohole oder 3- oder 4-basiger Carbonsäuren, wie sie in DE-OS 1 900 270 und US-PS 3 692 744 beschrieben sind, verzweigt werden. Beispiele bevorzugter Verzweigungsmittel sind Trimesinsäure, Trimellithsäure, Trimethylolethan und -propan und Pentraerythrit. Es ist ratsam, nicht mehr als 1 Mol-% des Verzweigungsmittels, bezogen auf die Säurekomponente, zu verwenden.

Besonders bevorzugt sind Polyalkylenterephthalate, die allein aus Terephthalsäure (oder deren reaktionsfähigen Derivaten, z.B. deren Dialkylestern) und Ethandiol und/oder Butandiol-1,4 hergestellt worden sind sowie deren Mischungen.

Bevorzugte Polyalkylenterephthalate sind auch Copolyester, die aus mindestens zwei der obengenannten Diole hergestellt sind; besonders bevorzugte Copolyester sind Poly-(ethylenglykol/butandiol-1,4)-terephthalate. In den Copolyestern können die verschiedenen Diolreste in Form von Blöcken oder statistisch verteilt vorliegen.

Die Polyalkylenterephthalate besitzen im allgemeinen eine Intrinsic-Viskosität von 0,4 bis 1,4 dl/g, vorzugsweise 0,5 bis 1,3 dl/g, insbesondere 0,6 bis 1,2 dl/g, jeweils gemessen in Phenol/o-Dichlorbenzol (1:1 Gew.-T1.) bei 25° C.

Geeignete aromatische Polysulfone und Polyethersulfone sind bevorzugt lineare, thermoplastische Polyarylenpolyethersulfone, in welchen die Aryleneinheiten über Ether- und Sulfongruppen verbunden sind. Man erhält sie durch Umsetzung eines Alkalimetalldoppelsalzes eines zweiwertigen Phenols (Bisphenols) mit einer zwei Halogenatome enthaltenden benzoiden Verbindung, wobei mindestens einer der beiden Reaktanten eine Sulfongruppe ($-SO_2-$) enthalten muß. Polyethersulfone sowie ihre Herstellung sind bekannt (vgl. US-PS 3 264 536, GB-PS 1 264 900, EP-A 0 038 028).

Die erfindungsgemäßen Polyethersulfone A enthalten wiederkehrende Einheiten der Formel (III)

$$-O-Z-O-W- \qquad (III)$$

worin

Z den Rest eines zweiwertigen Phenols und

W den Rest der benzoiden Verbindung mit einer inerten, elektronenanziehenden Gruppe bedeutet und

wobei Z und W durch aromatische Kohlenstoffatome über Valenzbindungen an die Sauerstoffatome gebunden sind und mindestens einer der Reste Z und W eine Sulfongruppe zwischen aromatischen Kohlenstoffatomen besitzt.

Bevorzugte Diphenole für die Herstellung der aromatischen Polyethersulfone A sind Verbindungen der Formel (IV)

$$HO-Z-OH \qquad (IV)$$

worin Z einen zweiwertigen, ein- oder mehrkernigen aromatischen Rest mit 6-30 C-Atomen bedeutet, und die beiden

OH-Gruppen direkt an C-Atome gebunden sind.

Besonders bevorzugte Diphenole entsprechen der Formel (V)

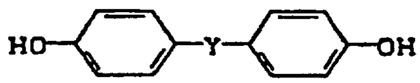

(V)

in der

Y eine Einfachbindung, einen Alkylen- oder Alkylidenrest mit 1-7 C-Atomen, einen Cycloalkylen- oder Cycloalkylidenrest mit 5-12 C-Atomen, -O-, -S-,

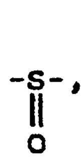

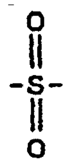

oder

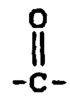

bedeutet sowie deren kernalkylierte und kernhalogenierte Derivate.

Beispiele für Diphenole sind:

Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-ether,
Bis-(hydroxyphenyl)-sulfoxide,
Bis-(hydroxyphenyl)-sulfone und
$\alpha,\alpha'$-Bis-(hydroxyphenyl)-diisopropylbenzole und
entsprechende kernalkylierte und kernhalogenierte Derivate.

Die wichtigsten Diphenole sind: Bisphenol A, Tetramethylbisphenol A, 1,1-Bis-(4-hydroxyphenyl)-isabutan, 1,1-Bis-(4-hydroxy-phenyl)cyclohexan, 4,4'-Dihydroxybiphenyl, 4,4'-Dihydroxydiphenyl-sulfid, 4,4'-Dihydroxydiphenylsulfon sowie deren di- und tetrahalogenierte und alkylierte Derivate. Besonders bevorzugt ist Bisphenol A. Es können auch beliebige Mischungen der genannten Diphenole verwendet werden.

Bevorzugte aromatische Dihalogenverbindungen sind zweikernige Verbindungen der Formel (VI)

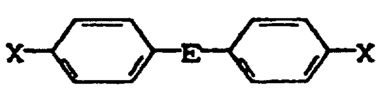

(VI)

Darin bedeuten:

X Halogen (F, Cl, Br, I) und

E zweiwertige elektronenanziehende Gruppen, wie Sulfon-, Carbonyl-, Vinyl-, Sulfoxid- oder Azo-Gruppen.

Jeder der beiden Benzolringe kann mit einem oder mehreren gesättigten Kohlenwasserstoffresten oder elektronenanziehenden Gruppen substituiert sein.

Bevorzugte aromatische Dihalogenverbindungen (VI) sind 4,4'-Dichlordiphenylsulfon und 4,4'-Dichlorbenzophenon.

Die aromatischen Polyethersulfone können auch verzweigt sein. Geeignete Verzweigungsmittel sind die für

die Herstellung von aromatischen Polyestern (DE-OS 2 940 024) und für die Hertellung von aromatischen Polyetercarbonaten (DE-OS 3 007 934) bekannten.

Als Kettenabbrecher bei der Herstellung der aromatischen Polyethersulfone A werden vorzugsweise Phenol, Alkylphenole mit $C_1$-$C_{12}$-Alkylgruppen und halogenierte Phenole sowie Bromide und Chloride von $C_1$-$C_{10}$-Alkanen in Mengen von 0,1 bis 10 Mol-% (im Falle von Phenolen bezogen auf Diphenole, im Falle von Chloriden bezogen auf die aromatischen Dihalogen-Verbindungen) verwendet.

Die reduzierten Viskositäten ($\eta_{red}$) der aromatischen Polyethersulfone A liegen im Bereich von 0,15 bis 1,5 dl/g vorzugsweise von 0,35 bis 0,65 dl/g (gemessen an Lösungen von 20 mg Polyethersulfon A in 10 ml $CHCl_3$ bei 25°C).

Bevorzugte Polyarylensulfide bestehen im wesentlichen aus Phenyleneinheiten, die über Sulfidgruppen aneinander gebunden sind, gemäß Formel (VII),

$$(\text{-Ar-S-})_n \qquad \text{(VII)}$$

in der Ar ein substituierter oder unsubstituierter Phenylrest und n wenigstens 50 ist. Geeignete Ausgangsverbindungen und Herstellungsverfahren sind beispielsweise in den US-Patentschriften 3 354 129 und 3 919 177 beschrieben.

Die Polyphenylensulfide können in linearer, verzweigter oder vernetzter Form vorliegen.

Üblicherweise werden zur Herstellung von Polyarylensulfiden polyhalogenierte aromatische Verbindungen mit schwefelhaltigen Verbindungen in polaren organischen Lösungsmitteln, gegebenenfalls in Gegenwart von Katalysatoren, umgesetzt.

Geeignete polyhalogenierte aromatische Verbindungen zur Synthese der Polyarylensulfide sind beispielsweise 1,2-Dichlorbenzol, 1,3-Dichlorbenzol, 1,4-Dichlorbenzol, 2,5-Dichlortoluol, 1,4-Dibrombenzol, 2,5-Dibromanilin und andere sowie deren Mischungen. Sollen verzweigte Polyarylensulfide hergestellt werden, müssen mindestens 0,05 Mol-% der polyhalogenierten aromatischen Verbindungen Tri- oder Tetrahalogenaromaten, wie beispielsweise 1,2,4-Trichlorbenzol, 1,3,5-Trichlorbenzol oder 1,2,4,5-Tetrachlorbenzol sein.

Geeignete schwefelhaltige Verbindungen zur Synthese der Polyarylensulfide sind Alkalisulfide wie beispielsweise Natrium- oder Kaliumsulfid. Vorzugsweise werden auch die Hydrate dieser Alkalisulfide eingesetzt. Die Alkalisulfide können auch aus Hydrogensulfiden mit Hilfe von Alkalihydroxiden wie Lithiumhydroxid, Natriumhydroxid oder Kaliumhydroxid erzeugt werden.

Als polare Lösungsmittel sind beispielsweise N-Methylpyrrolidon, N-Ethylpyrrolidon, N-Methylcaprolactam, N-Ethylcaprolactam oder 1,3-Dimethylimidazolidinon geeignet.

Als Katalysatoren können Substanzen wie beispielsweise Alkalifluoride, Alkaliphosphate oder Alkalicarboxylate in Mengen von 0,02 bis 1,0 Mol pro Mol Alkalisulfid eingesetzt werden.

<u>Additive B</u>

Geeignete niedermolekulare Additive können Stabilisatoren, Farbstoffe, Entformungsmittel, Antistatika oder Flammschutzmittel sein, die den thermoplastischen Polymeren in den üblichen Mengen zugesetzt werden.

Die erfindungsgemäßen Additive sind niedermolekular, d.h. sie weisen Molekulargewichte kleiner 2000 g/mol, vorzugsweise kleiner 1000 g/mol auf.

Bevorzugte Additive B im Sinne der Erfindung sind Flammschutzmittel. Dabei sind sowohl halogenhaltige als auch halogenfreie Verbindungen geeignet.

Vorzugsweise als Halogenverbindungen geeignet sind organische Chlor- und/oder Bromverbindungen, die bei der Herstellung und Verarbeitung der erfindungsgemäßen Formmassen stabil sind, so daß keine korrosiven Gase freigesetzt werden und die Wirksamkeit dadurch nicht beeinträchtigt wird.

Bevorzugte Additive B sind beispielsweise

1. Chlorierte und bromierte Diphenyle, wie Octachlordiphenyl, Decachlordiphenyl, Octabromdiphenyl, Decabromdiphenyl.
2. Chlorierte und bromierte Diphenylether, wie Octaund Decachlordiphenylether und Octa- und Decabromdiphenylether.
3. Chloriertes und bromiertes Phthalsäureanhydrid und seine Derivate, wie Phthalimide und Bisphthalimide, z.B. Tetrachlor- und Tetrabromphthalsäureanhydrid, Tetrachlor- und Tetrabromphthalimid, N,N'-Ethylenbis-tetrachlor- und N,N'-Ethylen-bis-tetrabromphthalimid, N-Methyltetrachlor- und N-Methyltetrabromphthalimid.
4. Chlorierte und bromierte Bisphenole, wie 2,2-Bis-(3,5-di-chlor-4-hydroxyphenyl)-propan und 2,2-Bis-(3,5-dibrom-4-hydroxyphenyl)-propan.

5. 2,2-Bis-(3,5-di-chior-4-hydroxyphenyl)-propan-Oligocarbonat und 2,2-Bis-(3,5-di-bram-4-hydroxyphenyl)-propan-Oligocarbonat mit einem mittleren Polykondensationsgrad von 2-20.

Bromverbindungen werden gegenüber den Chlorverbindungen bevorzugt.

Besonders bevorzugte Flammschutzadditive stellen halogenfreie Verbindungen dar.

Als Additive B geeignet sind alle üblicherweise als Flammschutzmittel einsetzbaren Phosphorverbindungen, insbesondere Phosphinoxide und Derivate von Säuren des Phosphors und Salze von Säuren und Säurederivaten des Phosphors.

Bevorzugt werden Derivate von Säuren des Phosphors und deren Salze, wobei darunter im Sinne der vorliegenden Erfindung Derivate (beispielsweise Ester) der Phosphorsäure, Phosphonsäure, Phosphinsäure, phosphorigen Säure, auch jeweils in dehydratisierter Form, sowie Alkali-, Erdalkali- und Ammoniumsalze dieser Säuren bzw. deren Derivate (beispielsweise teilveresterter Säuren) zu verstehen sind.

Besonders bevorzugte Phosphorverbindungen sind solche der Formel (VIII)

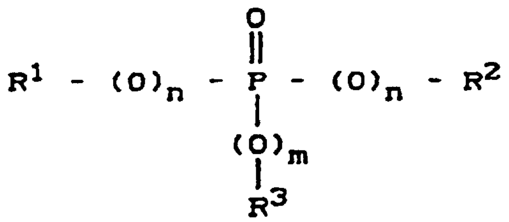

(VIII)

in denen $R^1$, $R^2$ und $R^3$ unabhängig voneinander ein gegebenenfalls halogeniertes $C_1$-$C_8$-Alkyl oder ein gegebenenfalls halogeniertes und/oder alkyliertes $C_5$- oder $C_6$-Cycloalkyl oder ein gegebenenfalls halogeniertes und/oder alkyliertes und/oder aralkyliertes $C_6$-$C_{30}$-Aryl, und "n" und "m" unabhängig voneinander 0 oder 1 sind.

Derartige Phosphorverbindungen sind generell bekannt (siehe beispielsweise Ullmann, Enzyklopädie der technischen Chemie, Band 18, Seiten 301 ff, 1979). Die aralkylierten Phosphorverbindungen sind beispielsweise in der DE-OS 38 24 356.0 beschrieben.

Gegebenenfalls halogenierte $C_1$-$C_8$-Alkylreste gemäß (VIII) können einfach oder mehrfach halogeniert, linear oder verzweigt sein. Beispiele für Alkylreste sind Chlorethyl, 2-Chlorpropyl, 2,3-Dibrompropyl, Butyl, Methyl oder Octyl.

Gegebenenfalls halogenierte und/oder alkylierte $C_5$- oder $C_6$-Cycloalkyle gemäß (VIII) sind gegebenenfalls einfach bis mehrfach halogenierte und/oder alkylierte $C_5$- oder $C_6$-Cycloalkyle, also z.B. Cyclopentyl, Cyclohexyl, 3,3,5-Trimethylcyclohexyl und vollchloriertes Cyclohexyl.

Gegebenenfalls halogenierte und/oder alkylierte und/oder aralkylierte $C_6$-$C_{30}$-Arylreste gemäß (VIII) sind gegebenenfalls ein oder mehrkernig, einfach oder mehrfach halogeniert und/oder alkyliert und/oder aralkyliert, z.B. Chlorphenyl, Bromphenyl, Pentachlorphenyl, Pentabromphenyl, Phenyl, Kresyl, Isopropylphenyl, benzylsubstituiertes Phenyl und Naphthyl.

Erfindungsgemäß einsetzbare Phosphorverbindungen gemäß Formel (VIII) sind z.B. Tributylphosphat, Tris-(2-chlorethyl)phosphat, Tris-(2,3-dibrompropyl)phosphat, Triphenylphosphat, Trikresylphosphat, Diphenylkresylphosphat, Diphenyloctylphosphat, Diphenyl-2-ethylkresylphosphat, Tri-(isopropylphenyl)phosphat, Tris-(p-benzylphenyl)phosphat, Triphenylphosphinoxid, Methanphosphonsäuredimethylester, Methanphosphonsäuredipenthylester und Phenylphosphonsäurediethylester.

Geeignete Flammschutzmittel sind auch dimere und oligomere Phosphate, deren Molekulargewicht kleiner 2000 g/Mol, vorzugsweise kleiner 1000 g/Mol ist. Diese sind beispielsweise in der euroäpischen Anmeldung EP-A 0 363 608 beschrieben.

<u>Maanesium-Aluminium-Silikate C</u>

Silikate C im Sinne der Erfindung sind Magnesium-Aluminium-Silikate. Diese zur Gruppe der Glimmerminerale gehörenden Silikate bestehen aus dünnen, flachen Plättchen und zeichnen sich durch Kristallwassergehalte > 5 % aus.

Damit diese Silikate als anorganische Trägermaterial für Additive in thermoplastischen Polymeren wirksam sind, müssen mehrere spezielle Vorbereitungsschritte durchlaufen werden:

A) Bei hohen Temperaturen, vorzugsweise zwischen 700 und 1100°C, wird das Silikat durch das verdampfende Kristallwasser expandiert. Dabei vergrößert sich das Volumen um das 10- bis 30-fache und es entstehen innere

Hohlräume. Das Schüttgewicht des Aluminium-Silikats wird vom Ausgangsniveau im Bereich 2 bis 3 g/cm$^3$ auf Werte < 1g/cm$^3$, bevorzugt < 0,5 g/cm$^3$, insbesondere < 0,2 g/cm$^3$ erniedrigt.

B) Das expandierte Silikat wird mit Säuren, vorzugsweise Salzsäure oder Schwefelsäure, behandelt, um störende Übergangsmetallverbindungen wie beispielsweise Oxide oder Hydroxide von Eisen, Mangan, Chrom oder anderen zu entfernen. Je nach Polymeren kann z.B. die Basizität oder Lewis-Säure-Aktivität stören, bei praktisch allen Polymeren ist eine Eigenfarbe des Trägermaterials unerwünscht.

Um eine Beeinträchtigung der thermoplastischen Polymere zu vermeiden, ist es erforderlich, die Menge an Ubergangsmetallverbindungen auf < 5 %, vorzugsweise < 1 %, insbesondere < 0,5 % zu reduzieren.

Die Teilchen der speziell vorbehandelten Silikate sollen vorzugsweise Durchmesser von 3 bis 500 µm, insbesondere von 5 bis 100 µm haben. Sind die Teilchen kleiner, dann verliert das Material die Fähigkeit zur Adsorption niedermolekularer Verbindungen, sind sie größer, dann werden die mechanischen Eigenschaften der Formmassen beeinträchtigt.

Die erfindungsgemäßen Formmassen können zusätzlich höhermolekulare Additive, Glasfaser oder Polymere, die nicht thermoplastisch verarbeitbar sind wie beispielsweise Polytetrafluorethylen, in den üblichen Mengen enthalten.

Die erfindungsgemäßen Formmassen können hergestellt werden, indem man die Bestandteile in bekannter Weise vermischt und bei erhöhten Temperaturen, vorzugsweise bei 200 bis 350°C, in üblichen Vorrichtungen, wie Innenknetern, Extrudern oder Doppelwellenschnecken, schmelzcompoundiert oder schmelzextrudiert. Die Bestandteile können nacheinander oder gleichzeitig gemischt werden. In speziellen Fällen kann es günstig sein, aus den niedermolekularen Additiven und den Magnesium-Aluminium-Silikaten Vormischungen herzustellen.

Weiterer Gegenstand der Erfindung ist also ein Verfahren zur Herstellung der beschriebenen Formmassen durch Mischen der Komponenten bei erhöhter Temperatur.

Die erfindungsgemäßen Formmassen können zur Herstellung von Formkörpern jeder Art, z.B. durch Spritzgießen, verwendet werden. Beispiele für Formkörper sind:

Gehäuseteile (z.B. für Haushaltsgeräte wie Saftpressen, Kaffeemaschinen, Mixer), Abdeckplatten für das Baugewerbe oder Automobilteile. Sie werden außerdem für elektrische Geräte, z.B. für Steckerleisten, eingesetzt, weil sie sehr gute elektrische Eigenschaften haben.

Formkörper können auch durch Tiefziehen aus vorher hergestellten Platten oder Folien hergestellt werden.

Weiterer Gegenstand der Erfindung ist also die Verwendung der beschriebenen Formmassen zur Herstellung von Formkörpern.

Beispiele

Thermoplastische Polymere A

A1 Lineares Bisphenol A-Polycarbonat mit einer relativen Lösungsviskosität von 1,26 bis 1,28 (gemessen in $CH_2Cl_2$ bei 25°C und in einer Konzentration von 0,5 g/100 ml,

A2 Styrol/Acrylnitril-Copolymeriat (Styrol/Acrylnitril-Gew,-Verhältnis 72:28) mit einer Grenzviskosität von 0,55 dl/g (Messung in Dimethylformamid bei 20°C).

A3 Pfropfpolymerisat von 45 Gew.-Teilen Styrol und Acrylnitril im Verhältnis 72:28 auf 55 Gew. -Teile teilchenförmigen vernetzten Polybutadienkautschuk (mittlerer Teilchendurchmesser $d_{50}$ = 0,4 µm), hergestellt durch Emulsionspolymerisation.

A4 Pfropfpolymerisat A3 + Polytetrafluorethylen

Das Tetrafluorethylenpolymerisat wird als koagulierte Mischung aus einer SAN-Pfropfpolymerisat-Emulsion gemäß A3 in Wasser und einer Tetrafluorethylenpolymerisat-Emulsion in Wasser eingesetzt. Das Gewichtsverhältnis Pfropfpolymerisat A3 zum Tetrafluorethylenpolymerisat in der Mischung ist 90 Gew.-% zu 10 Gew.-%. Die Tetrafluorethylenpolymerisat-Emulsion besitzt einen Feststoffgehalt von 60 Gew.-%, die Teilchengröße liegt zwischen 0,05 und 0,5 µm. Die SAN-Pfropfpolymerisat-Emulsion besitzt einen Feststoffgehalt von 34 Gew.-% und eine mittlere Latexteilchengröße von 0,4 µm.

Additive B

Triphenylphosphat (Molekulargewicht 326,3 g/mol)

Silikate C

Ein expandiertes Magnesium-Aluminium-Silikat (Handelsname Vermiculit, Fa. Klein) mit einem Schüttgewicht von 0,11 g/cm$^3$ wurde zunächst mit Wasser behandelt. Dabei wurden sowohl die leichteren Bestandteile (organische Reste) als auch schwere, nicht expandierte Gesteinsreste abgetrennt. Anschließend wurde das Material ca. 30 Minuten in halbkonzentrierter Schwefelsäure gerührt, um die Übergangsmetallverbindungen, die sich bei der Verarbeitung störend auf die thermoplastischen Polymere auswirken, herauszulösen. Das zurückbleibende weiße Pulver (Schüttgewicht: 0,15 g/cm$^3$) wurde gewaschen, getrocknet und mit der vierfachen Menge Triphenylphosphat in der Schmelze intensiv gemischt. Nach Erkalten der Schmelze war das zerkleinerte Material (Vormischung aus Magnesium-Aluminium-Silikat und Triphenylphosphat im Gewichtsverhältnis 1:4) in den Mischungen mit den Polymeren einsatzbereit.

Herstellung und Prüfung der erfindungsgemäßen Formmassen

Die Bestandteile A, B und C wurden auf einem 3 1-Innenkneter bei Temperaturen von 210 bis 250°C aufgeschmolzen und homogenisiert.

Von den Formmassen wurden auf einer Spritzgußmaschine Stäbe der Abmessung 80 x 10 x 4 mm$^3$ (Verarbeitungstemperatur: 260°C) hergestellt, an denen die Kerbschlagzähigkeit (nach Methode ISO 180) bei Raumtemperatur gemessen wurde.

Die Bestimmung der Wärmeformbeständigkeit nach Vicat B erfolgte gemäß DIN 53 460.

Das Brandverhalten der Proben wurde nach UL-Subj. 94 V an Stäben der Abmessung 127 x 12,7 x 1,6 mm gemessen, hergestellt auf einer Spritzgußmaschine bei 280°C.

Der UL 94 V-Test wird wie folgt durchgeführt;

Substanzproben werden zu Stäben der Abmessung 127 x 12,7 x 1,6 mm geformt, Die Stäbe werden vertikal so montiert, daß die Unterseite des Probekörpers sich 305 mm über einem Streifen Verbandstoff befindet. Jeder Probestab wird einzeln mittels zweier aufeinanderfolgender Zündvorgänge von 10 s Dauer entzündet, die Brenneigen schaften nach jedem Zündvorgang werden beobachtet und danach die Probe bewertet. Zum Entzünden der Probe wird ein Bunsenbrenner mit einer 10 mm (3,8 inch) hohen blauen Flamme von Erdgas mit einer Wärmeeinheit von 3,73 x 10$^4$ kJ/m$^3$ (1000 BUT per cubic foot) benutzt.

Die UL 94 V-O-Klassifizierung umfaßt die nachstehend beschriebenen Eigenschaften von Materialien, die gemäß der UL 94 V-Vorschrift geprüft wurden. Die Formmassen in dieser Klasse enthalten keine Proben, die länger als 10 s nach jeder Einwirkung der Testflamme brennen; sie zeigen keine Gesamtflammzeit von mehr als 50 s bei der zweimaligen Flammeinwirkung auf jeden Probensatz; sie enthalten keine Proben, die vollständig bis hinaus zu der am oberen Ende der Probe befestigten Halteklammer abbrennen; sie weisen keine Proben auf, die die unterhalb der Probe angeordnete Watte durch brennende Tropfen oder Teilchen entzünden; sie enthalten auch keine Proben, die länger als 30 s nach Entfernen der Testflamme glimmen.

Andere UL 94-Klassifizierung bezeichnen Proben, die weniger flammwidrig und selbstverlöschend sind und die flammende Tropfen oder Teilchen abgeben. Diese Klassifizierungen werden mit UL 94 V-1 und V-2 bezeichnet. N. B. heißt "nicht bestanden" und ist die Klassifizierung von Proben, die eine Nachbrennzeit von ≥ 30 s aufweisen.

Eine Zusammenstellung der Eigenschaften der erfindungsgemäßen Formmassen findet sich in nachfolgender Tabelle.

Tabelle 1

| Zusammensetzung und Eigenschaften der Formmassen | | | | | | | | | |
|---|---|---|---|---|---|---|---|---|---|
| Beispiel | Komponenten | | | | | | UL 94 V 1,6 mm[1]) | $a_k$ [kJ/m$^2$] | Vicat VST/B $_{120}$ [°C] |
| | A1 | A2 | A3 | A4 | B | C | | | |
| | [Gew.-Teile] | | | | | | | | |
| 1(Vgl.) | 65 | 15 | 5 | 3 | 12 | - | V0 | 21 | 90 |

[1]) Konditionierung der Prüfkörper 7 Tage bei 23°C und 50 %

Tabelle 1 (fortgesetzt)

| Zusammensetzung und Eigenschaften der Formmassen | | | | | | | | | |
|---|---|---|---|---|---|---|---|---|---|
| Beispiel | Komponenten | | | | | | UL 94 V 1,6 mm[1]) | $a_k$ [kJ/$m^2$] | Vicat VST/B $_{120}$ [°C] |
| | A1 | A2 | A3 | A4 | B | C | | | |
| | [Gew.-Teile] | | | | | | | | |
| 2 | 65 | 15 | 5 | 3 | - | 10[2]) | V0 | 21 | 102 |
| 3(Vgl.) | 65 | 15 | 5 | 3 | 10 | - | V1 | 22 | 96 |
| 4(Vgl.) | 65 | 15 | 5 | 3 | 8 | - | n.b. | 33 | 102 |

[1]) Konditionierung der Prüfkörper 7 Tage bei 23°C und 50 %
[2]) Effektiver Gehalt Triphenylphosphat 8 Gew. -Teile

Aus Tabelle 1 wird deutlich, daß nur das erfindungsgemäße Beispiel 2 eine optimale Eigenschaftskombination aus Brandwidrigkeit, hoher Wärmeformbeständigkeit und guter Kerbschlagzähigkeit bietet. Gleichzeitig zeigt sich auch die Verbesserung der Additiv-Effektivität durch den Zusatz des Magnesium-Aluminium-Silikats. Dabei wird das günstige Brandverhalten bereits bei einem effektiven Triphenylphosphatgehalt von 8 Gew.-Teilen erreicht, die entsprechenden Vergleichsbeispiele 3 und 4 mit 10 bzw. 8 Gew.-Teilen Triphenylphosphat zeigen dagegen ein deutlich schlechteres Brandverhalten.

**Patentansprüche**

1. Thermoplastische Formmassen enthaltend

   A. 100 Gew.-Teile eines Polymeren aus bifunktionellen reaktiven Verbindungen,
   B. 0,1 bis 40 Gew.-Teile eines Additives mit einem Molekulargewicht kleiner 2000 g/Mol, und
   C. 0,1 bis 50 Gew.-Teile eines Magnesium-Aluminium-Silikates mit einem Schüttgewicht <1 g/$cm^3$, einem Teilchendurchmesser von 1 bis 5000 µm, und einem Gehalt an Übergangsmetallverbindungen <5 %, welches bei 700 bis 1100°C durch das verdampfende Kristallwasser expandiert und danach durch Behandlung mit Säuren erhältlich ist.

2. Formmassen gemäß Anspruch 1, enthaltend als A thermoplastische Polyester, thermoplastische Polyamide, thermoplastische Polyarylensulfide oder thermoplastische Polycarbonate.

3. Formmassen gemäß Anspruch 1, enthaltend als B Flammschutzmittel.

4. Formmassen gemäß Anspruch 1 bis 3, wobei der Gehalt an Übergangsmetallverbindung an der Komponente C) <1 % beträgt.

5. Formmassen gemäß Anspruch 1 bis 4, wobei der Teilchendurchmesser der Komponente C) 3 bis 500 µm beträgt.

6. Verfahren zur Herstellung der Formmassen gemäß Anspruch 1 bis 5, wobei die Bestandteile vermischt und bei erhöhten Temperaturen schmelzcompoundiert oder schmelzextrudiert werden.

7. Verwendung der Formmassen gemäß Anspruch 1 bis 5 zur Herstellung von Formkörpern.

8. Formkörper erhältlich aus Formmassen gemäß Anspruch 1 bis 5.

**Claims**

1. Thermoplastic moulding compositions containing

   A. 100 parts by weight of a polymer consisting of bifunctional reactive compounds,

B. 0.1 to 40 parts by weight of an additive with a molecular weight of less than 2000 g/mole, and

C. 0.1 to 50 parts by weight of a magnesium-aluminium silicate with a bulk density of <1 g/cm$^3$, a particle diameter of 1 to 5000 µm and a content of transition metal compounds of <5%, which expands at 700 to 1100°C owing to the evaporating water of crystallisation and is then obtainable by treatment with acids.

**2.** Moulding compositions according to claim 1, containing thermoplastic polyesters, thermoplastic polyamides, thermoplastic polyarylene sulfides or thermoplastic polycarbonates as A.

**3.** Moulding compositions according to claim 1, containing flame retardants as B.

**4.** Moulding compositions according to claims 1 to 3, wherein the content of transition metal compound in component C) is <1%.

**5.** Moulding compositions according to claims 1 to 4, wherein the particle diameter of component C) is 3 to 500 µm.

**6.** Process for the production of the moulding compositions according to claims 1 to 5, wherein the components are mixed and melt-compounded or melt-extruded at elevated temperatures.

**7.** Use of the moulding compositions according to claims 1 to 5 for the production of mouldings.

**8.** Mouldings obtainable from moulding compositions according to claims 1 to 5.

## Revendications

**1.** Masses de moulage thermoplastiques contenant

A. 100 parties en poids d'un polymère de composés réactifs bifonctionnels,
B. 0,1 à 40 parties en poids d'un additif avec une masse moléculaire inférieure à 2000 g/mole, et
C. 0,1 à 50 parties en poids d'un silicate de magnésium-aluminium avec une densité apparente < 1 g/cm$^3$, un diamètre de particules de 1 à 5000 µm, et une quantité de composés métalliques de transition < 5 %, qui s'expanse de 700 à 1100 °C par l'eau de cristallisation qui se vaporise et que l'on peut ensuite préparer par traitement avec des acides.

**2.** Masses de moulage selon la revendication 1, contenant comme composant A un polyester thermoplastique, un polyamide thermoplastique, un polyarylsulfure thermoplastique ou un polycarbonate thermoplastique.

**3.** Masses de moulage selon la revendication 1, contenant comme composant B un agent ignifuge.

**4.** Masses de moulage selon les revendications 1 à 3, dans lesquelles la quantité de composé métallique de transition du composant C) est < 1 %

**5.** Masses de moulage selon les revendications 1 à 4, dans lesquelles le diamètre de particules du composant C) est 3 à 500 µm.

**6.** Procédé de préparation des masses de moulage selon la revendication 1 à 5, dans lequel on mélange les constituants et on les mélange à l'état fondu ou on les extrude à l'état fondu à des températures élevées.

**7.** Utilisation des masses de moulage selon les revendications 1 à 5, pour la préparation de corps moulés.

**8.** Corps moulés susceptibles d'être obtenus à partir de masses de moulage selon les revendications 1 à 5.